# EUROPÄISCHE PATENTANMELDUNG

(11) **EP 1 031 306 A2**
(43) Veröffentlichungstag der Anmeldung: **30.08.2000**
(21) Anmeldenummer: 00102839.8
(22) Anmeldetag: 11.02.2000
(51) Int. Cl.: A47F 10/06

(54) **Transportbehälter zur Aufnahme von Gastronomiegeräten**

(30) Priorität: 12.02.1999 DE 29902495 U; 21.05.1999 DE 19923574
(71) Anmelder: MKN Maschinenfabrik Kurt Neubauer GmbH & Co, 38300 Wolfenbüttel (DE)
(72) Erfinder: Huppert, Paul-Werner, 38300 Wolfenbüttel (DE)
(74) Vertreter: Einsel, Martin, Dipl.-Phys.

(57) **Zusammenfassung**

Die vorliegende Erfindung betrifft einen Transportbehälter zur Aufnahme von Gastronomiegeräten und Bedarfsartikeln aller Art, eine in derartige Transportbehälter integrierte transportable Küche sowie Verbindungssysteme, insbesondere Stecksysteme, zum Verbinden einzelner Transportbehälter.

## Beschreibung

Die vorliegende Erfindung betrifft einen Transportbehälter zur Aufnahme von Gastronomiegeräten und Bedarfsartikeln aller Art, eine in derartige Transportbehälter integrierte transportable Küche sowie Verbindungssysteme zum Verbinden einzelner Transportbehälter.

Die gastronomische Versorgung durch professionelle Veranstaltungsausrichter oder auch für den privaten Bedarf bei festlichen Anlässen, Veranstaltungen oder dergleichen benötigt flexible und einfach zu handhabende Versorgungssysteme. Beispielsweise lassen sich private Veranstaltungsausrichter für eine vorgesehene Party, ein Gartenfest oder dergleichen von einer Stadtküche oder eigens dazu eingerichteten Unternehmen mit den nötigen Utensilien, Geschirr und auch Speisen versorgen. Benötigte Vorrichtungen, Bedarfsartikel, wie Geschirr und dergleichen, und auch die Getränke und Speisen werden dann zum bestellten Zeitpunkt angeliefert und nach Beendigung der Veranstaltung wieder abgeholt.

Derartige Veranstaltungen werden häufig durch Catering-Dienstleister mit Speisen und Getränken versorgt, die zunehmend vor Ort zubereitet werden. Hierfür werden entsprechende transportable Gerätschaften benötigt.

Diese Gerätschaften müssen leicht und sicher transportierbar sein, sich vielseitig einsetzen lassen, untereinander kompatibel und schnell und sicher auf- und abbaubar sein.

Zudem sollten die einzelnen Gerätschaften miteinander kombinierbar sein und sich auf einfache Art und Weise untereinander fest verbinden lassen, so dass eine einheitliche Arbeitsebene erhalten werden kann.

In dem deutschen Gebrauchsmuster DE 298 02 457 wird eine transportable Küche beschrieben, mit mehreren nach dem Baukastenprinzip untereinander kombinierbaren Funktionseinheiten, wobei vorgeschlagen wird, für den sicheren Transport und den schnellen Auf- und Abbau die einzelnen Funktionseinheiten bzw. Gerätschaften als verschließbare Container auszubilden.

Die einzelnen Funktionseinheiten können hierbei Anschlüsse für Versorgungsleitungen enthalten, wie für Wasser, Strom oder Datenübertragung, die untereinander über entsprechende Leitungen verbunden sein können. Eine feste Verbindung der einzelnen Funktionseinheiten miteinander, insbesondere unter Ausbildung einer einheitlichen Arbeitsebene, ist jedoch nicht vorgesehen.

Eine stabile einheitliche Arbeitsebene ist aber für die Funktionsfähigkeit von transportablen Küchen wesentlich, da damit auch Speisen direkt vor Ort zubereitet werden sollen und dafür entsprechend geeignete Flächen vorgesehen werden müssen. Darüber hinaus sollte die Verbindungsnaht zwischen zwei Funktionseinheiten möglichst dicht sein, um ein Durchsickern von verschütteten Speisen oder Flüssigkeiten beziehungsweise Eindringen in die einzelnen Funktionseinheiten zu verhindern.

Es war die Aufgabe der vorliegenden Erfindung, derartige Versorgungssysteme zur Verfügung zu stellen, wobei die einzelnen Einheiten nicht nur vielseitig verwendbar bzw. multifunktional sein sollten, je nach Bedarf zur Aufnahme von Gastronomiegeräten und Bedarfsartikeln aller Art geeignet, sicher und einfach transportierbar und auf einfache Art und Weise schnell und sicher auf- und abbaubar sein sollten, sondern auch über ein Verbindungssystem sicher und fest untereinander unter Ausbildung einer einheitlichen Arbeitsebene verbunden werden können, wobei der Aufbau bzw. die Verbindung vorzugsweise ohne zusätzliches Werkzeug möglich sein sollte.

Gelöst wird diese Aufgabe durch einen Transport- oder Schutzbehälter zur Aufnahme von Gastronomiegeräten und Bedarfsartikeln aller Art, der aus einem kastenförmigen Grundelement besteht, das auf Rollen läuft und die einzelnen Einheiten Vorrichtungen aufweisen zum festen Verbinden der einzelnen Einheiten untereinander zur Ausbildung einer durchgehenden Arbeitsebene.

Zudem betrifft die Erfindung ein Verbindungssystem, mit dem einzelne Behälter sicher und fest miteinander verbunden werden können.

Der Behälter kann je nach Bedarf mit Küchengeräten, Kochutensilien, Möbelsets wie Biergartengarnituren oder Stehtischen, oder sonstigen Gerätschaften bestückt sein. Er kann je nach Ausgestaltung auseinandergeklappt als zusätzliche Arbeitsfläche z.B. als Geräteschrank, Abstellfläche, Tresen oder Schanktisch dienen. Insbesondere können in diesen Behältern Kücheneinrichtungen integriert sein.

Nachfolgend wird ein erfindungsgemäßer Transportbehälter, der integriert eine Kücheneinrichtung enthält, als Funktionseinheit bezeichnet. Die in den Transportbehälter integrierten Kücheneinrichtungen können Kochgeräte wie Koch- und/oder Bratvorrichtungen sein, Würstchenwannen, Warmhaltewannen, Fritierbecken, aber auch Arbeitstische, Griddleplatten, Rostbratgeräte etc. Die Funktionseinheiten können weitere Ausstattungen wie Türen und Schubladen etc. aufweisen.

Der Transportbehälter kann aus einem beliebigem Material bestehen. Er kann aus Metall, Kunststoff, Holz oder einem Verbundmaterial gebildet sein. Auch eine Kombination derartiger Materialien ist denkbar. Gemäß einer bevorzugten Ausführungsform besteht der Transportbehälter aus Sperrholz, vorzugsweise Birkensperrholz, das mit einer schlagzähen Kunststoffoberfläche beschichtet ist.

Er kann ganz oder teilweise eine Innenauskleidung oder Polsterung aufweisen, die zusätzlichen Schutz für den Inhalt beim Transport gewährleisten kann. Beispielsweise kann er mit einem Polyethylenmaterial wie PE 500 ausgekleidet sein.
Auf den Außen- und/oder Innenflächen des Behälters können Profile vorgesehen sein, die besonders beanspruchte Bereiche, z.B. Ecken und Kanten, schützen und zusätzlich stabilisieren können. Vorzugsweise wird dafür ein strapazierfähiges Material verwendet. So kann z.B. Aluminium verwendet werden, das zudem optisch ansprechend ist.

Die Behälterwände können farbig ausgestaltet sein, sie können als Werbefläche dienen.

Das kastenförmige Grundelement kann kubisch oder quaderförmig ausgebildet sein. Einzelne Teile können abnehmbar sein, um so die Bedienung der integrierten Gerätschaften zu ermöglichen.
Der Behälter kann multifunktional ausgestaltet sein, wobei durch Aufklappen, Hochklappen und/oder Auseinanderklappen von Seitenwänden und/oder des Deckels zusätzliche Arbeitsflächen geschaffen werden können.

Für den Zusammenhalt und Stabilität der Wände und Deckel sind übliche Verschlüsse, Scharniere und gegebenenfalls Profilleisten und -ecken vorgesehen.
Als Verschlüsse haben sich insbesondere Schnellverschlüsse, die mit Handdrehgriffen versehen sein können, bewährt, z.B. sogenannte Drehriegelverschlüsse.
Zudem können noch weitere Griffe vorgesehen sein.

Zum leichteren Transport sind üblicherweise Rollen, vorzugsweise Lenkrollen, vorgesehen. Deren Anzahl kann beispielsweise je nach Größe des Behälters variieren, wobei vier üblich sind. Die Rollen können fest oder auch abnehmbar sein.

Die Maße der Behälter, d.h. Breite, Tiefe und Höhe, sind an sich frei wählbar, sollten jedoch aufeinander abgestimmt sein, um z.B. Austauschbarkeit, effiziente Verstauung beim Transport bzw. Verbinden zu einem Arbeitsbereich mit einheitlicher Arbeitshöhe zu ermöglichen.

Bevorzugt weisen die einzelnen Transportbehälter zumindest jeweils die gleiche Tiefe und Höhe auf.

Bevorzugte Ausführungsformen der Erfindung sind in den Figuren veranschaulicht. Es zeigen:
- **Figur 1**: die Frontansicht eines geschlossenen Transportbehälters;
- **Figur 2**: einen als Getränkeschrank verwendbaren Transportbehälter gemäß Figur 1, der im aufgeklappten bzw. geöffneten Zustand als Schanktisch ausgebildet ist;
- **Figur 3**: die Seitenansicht einer weiteren Ausführungsform eines erfindungsgemäßen Transportbehälters im geschlossenen Zustand, die insbesondere zur Aufnahme von Kücheneinrichtungen wie einer Koch- oder Bratausrüstung geeignet ist;
- **Figur 4**: zwei miteinander verbundene Transportbehälter, in der Frontansicht im geöffneten Zustand, wobei die Transportbehälter jeweils mit einer Koch- oder Bratausrüstung ausgestattet sind;
- **Figur 5**: einen Transportbehälter im aufgeklappten Zustand, der zur Aufnahme eines Möbelsets ausgebildet ist;
- **Figur 6**: die Seitenansicht eines geöffneten Transportbehälters als Funktionseinheit mit angebrachter Abdeckung;
- **Figur 7.1**: eine bevorzugte Ausführungsform einer Profilierschiene, angebracht an einer Funktionseinheit zur Montage einer Abdeckung;
- **Figur 7.2**: die Seitenansicht eines geöffneten, mit Abdeckung versehenen Behälters;
- **Figur 8**: weitere bevorzugte Ausführungsformen einer Profilierschiene zum Verbinden einer Funktionseinheit mit einer Abdeckung;
- **Figur 9.1**: die Aufsicht auf eine Abdeckung sowie einen aufsteckbaren Klemmsteg;
- **Figur 9.2**: einen Verbindungssteg zum Verbinden von benachbarten Transportbehältern über die Abdeckungen;
- **Figur 9.3**: einen Verbindungssteg, der zur Arbeitsplatte verbreitert ist;
- **Figur 9.4**: einen als Eckmodul ausgebildeten Verbindungssteg;
- **Figur 9.5**: eine Gewürzstation für eine erfindungsgemäße Funktionseinheit; die gleichzeitig als Verbindungssteg dienen kann;
- **Figur 9.6**: einen Hustenschutz;
- **Figur 9.7**: ein Scirting;
- **Figuren 10.1 bis 10.5**: verschiedene Ausführungsformen von erfindungsgemäßen Funktionseinheiten; sowie

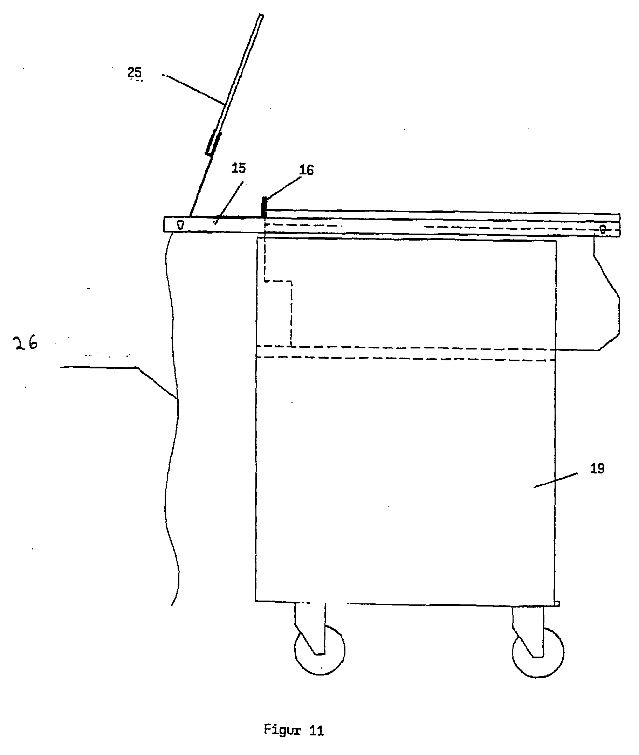

- **Figur 11**: die Seitenansicht einer erfindungsgemäßen Funktionseinheit mit aufgestecktem Hustenschutz gemäß Figur 9.6 und angebrachtem Scirting gemäß Figur 9.7.

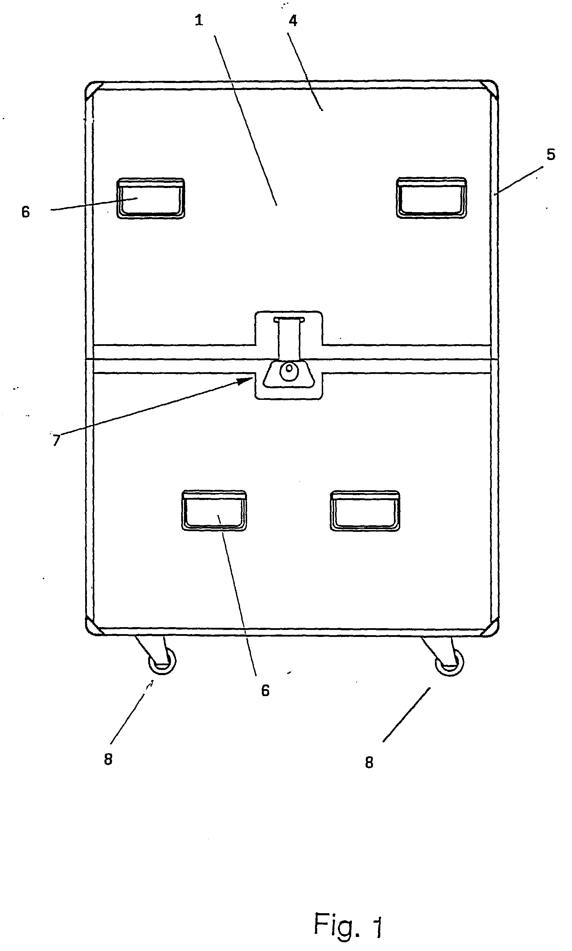

Figur 1 zeigt die Frontansicht einer Ausführungsform eines erfindungsgemäßen Transportbehälters zur Aufnahme und Transport von Gerätschaften und Utensilien im geschlossenen Zustand. Der hier gezeigte Transportbehälter 1 weist einen abnehmbaren Deckel 4 mit Verschluss 7 zum Verbinden des Deckels mit dem Transportbehälter, Haltegriffe 6, Rollen 8 sowie Profilleisten 5 auf.

Gemäß einer bevorzugten Ausgestaltung besteht der Behälter aus Birkensperrholz, das mit einer schlagzähen Kunststoffoberfläche versehen sein kann und gegebenenfalls mit Polyethylen ausgekleidet ist.

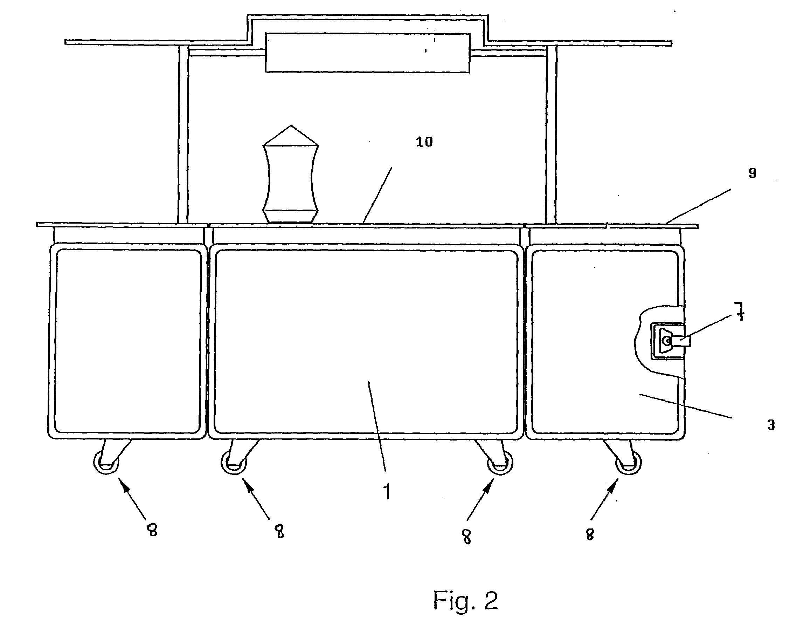

In Figur 2 ist ein Transportbehälter gemäß Figur 1 gezeigt, der multifunktional ausgebildet ist. Hierbei bildet der Transportbehälter im aufgeklappten bzw. geöffneten Zustand einen Schanktisch 10 aus. Die Seitenwände 3 sind ausgeklappt und als zusätzliche Arbeitsflächen 9 vorgesehen.

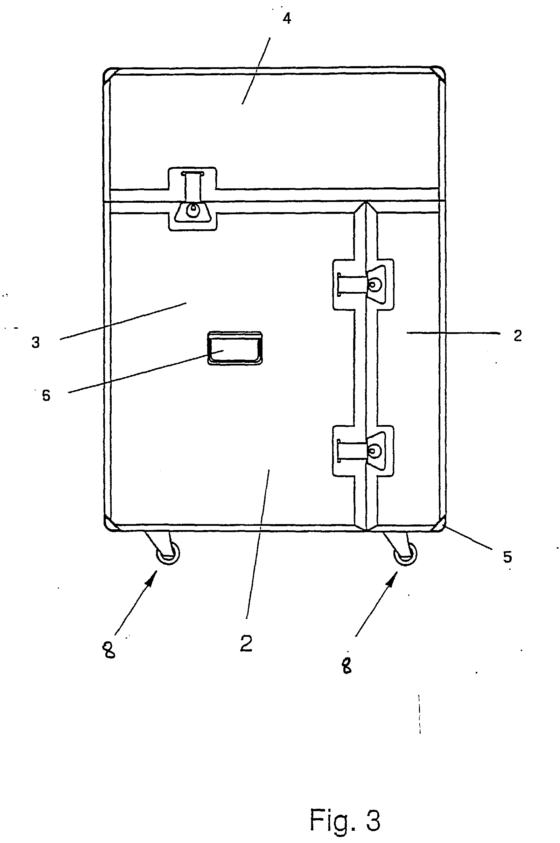

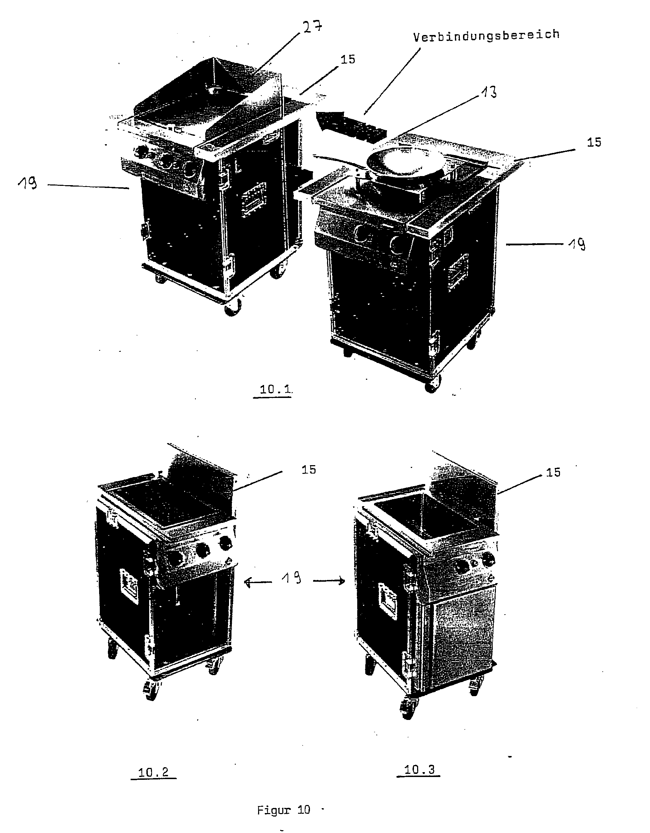

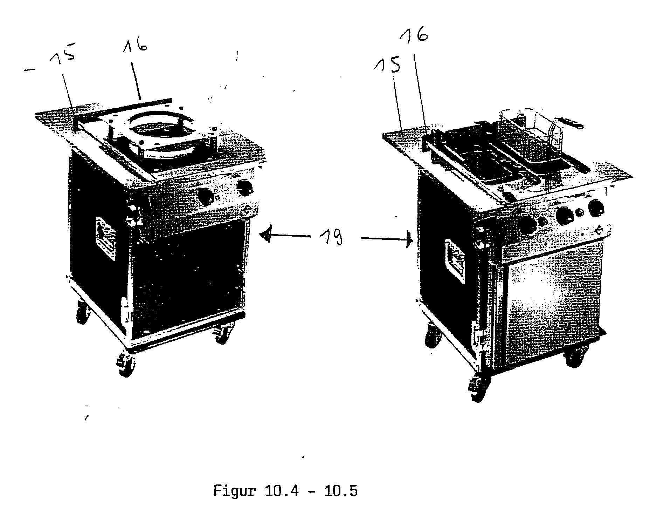

In der in Figur 3 gezeigten Ausführungsform ist der Transportbehälter insbesondere zur Aufnahme von Kücheneinrichtungen wie Kochgeräten zum Kochen und Braten ausgestaltet. Der Deckel 4 und das Frontteil 2 sind abnehmbar, wobei im geöffneten Zustand, wie z. B. in Figuren 10.1 bis 10.5 gezeigt, die entsprechenden Einbauten sichtbar werden.

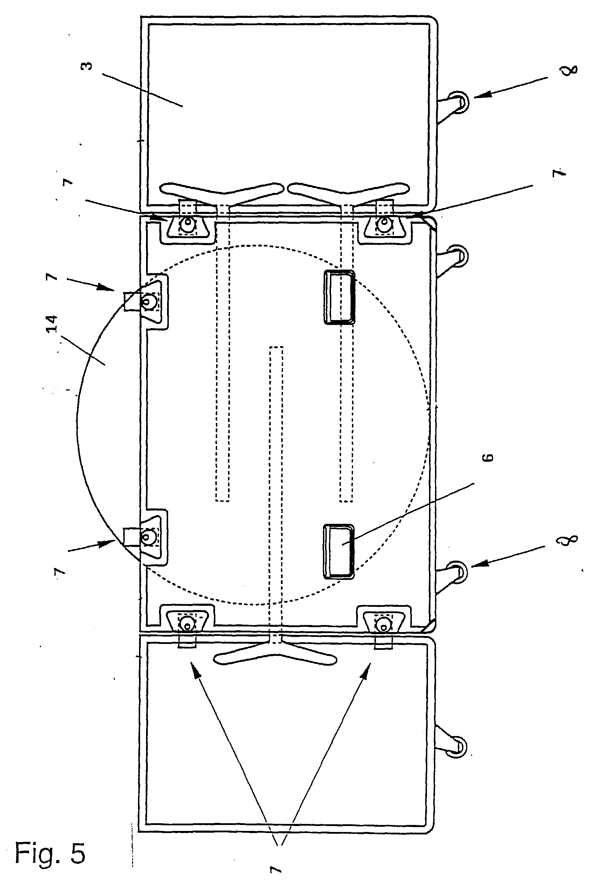

Figur 5 zeigt die Frontansicht eines quaderförmigen Grundelements mit ausgeklappten Seitenwänden 3 und Schnellverschlüssen 7, das zur Aufnahme eines Möbelsets 14 dient. Das Möbelset 14 kann z.B. aus vier bis sechs Stehtischen bestehen, die in Tischplatten und Untergestelle zerlegt und so in dem Transportbehälter untergebracht werden können.

Wie bereits erwähnt, lassen sich einzelne Transportbehälter bzw. Funktionseinheiten miteinander verbinden und von den Benutzern nach jeweils individuellen Vorstellungen frei auswählbar zu Küchen zusammenstellen.

Die Elemente für die Verbindungssysteme können an den Behälterwandungen oder auch an den Kücheneinrichtungen der Funktionseinheiten angebracht sein.

Die Verbindung kann an sich beliebig erfolgen. Beispiele für Verbindungssysteme sind in der deutschen Patentschrift DE 43 06 545 C1 beschrieben. Die dort beschriebenen Verbindungssysteme verhindern insbesondere ein Durchsickern von Flüssigkeiten wie Nahrungssubstanzen oder Spülmittel etc. durch den Verbindungsbereich. Hierzu weisen die Funktionseinheiten
a) Seitenflächen auf, die an ihren der jeweils benachbarten Funktionseinheit zugewandten Oberkanten gegenüber der benachbarten Seitenfläche durch Abwicklung gekröpft sind, so dass zwei benachbarte Funktionseinheiten einen rinnenförmigen Spalt bilden,
b) Deckflächen auf, deren einander zugewandte Seitenkanten nach unten abgewickelt sind und die gekröpften Oberkanten der Seitenflächen überlappen.
Hierbei wird ein rinnenförmiger Spalt im Verbindungsbereich ausgebildet, wobei gegebenenfalls in diesen Spalt eine Schiene zur zusätzlichen Sicherung eingefügt werden kann.
Für die vorstehende Erfindung wird auf den Inhalt dieser Patentschrift voll inhaltlich Bezug genommen.

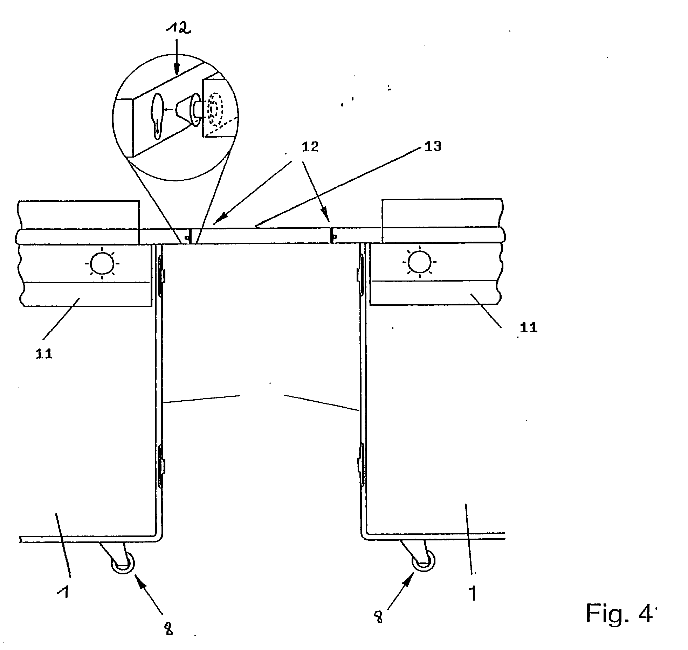

Die Verbindung kann, wie in Figur 4 gezeigt, über ein Stecksystem mit Löchern und Zapfen erfolgen, z.B. einem Stahlstecksystem, wobei die Vergrößerung eine bevorzugte Ausführungsform eines Verbindungssystems 12 zeigt.

Die Verbindung erfolgt zweckmäßigerweise in Arbeitshöhe. Die für die Verbindung erforderlichen Elemente sind im Fall von Funktionseinheiten üblicherweise an den Einbauten angebracht.

Eine große Flexibilität der Zusammenstellung wird dadurch gewährleistet, dass zwischen zwei benachbarten Funktionseinheiten ein Verbindungssteg 13 eingesetzt sein kann.

Wie in Figur 4 gezeigt kann der Verbindungssteg 13 auf den den Funktionseinheiten zugewandten Seitenflächen Zapfen aufweisen, die in entsprechend positionierte Löcher der Funktionseinheit eingreifen können und so die Funktionseinheiten miteinander verbinden.

Die Breite des Verbindungssteges 13 kann beliebig je nach Bedarf gewählt werden. Breite Verbindungsstege können so als zusätzliche Arbeitsfläche wirken.

Insgesamt werden die Abmessungen des Verbindungsstegs 13 vorzugsweise so gewählt, dass der Verbindungssteg 13 zum Transport sicher in den Transportbehältern untergebracht werden kann.

Das Material für die Verbindungsstege ist beliebig wählbar, es kann ein Material gewählt werden, wie es auch für die Transportbehälter geeignet ist, es kann nach optischen oder hygienischen Gesichtspunkten gewählt werden, beispielsweise kann es Chromnickelstahl sein.

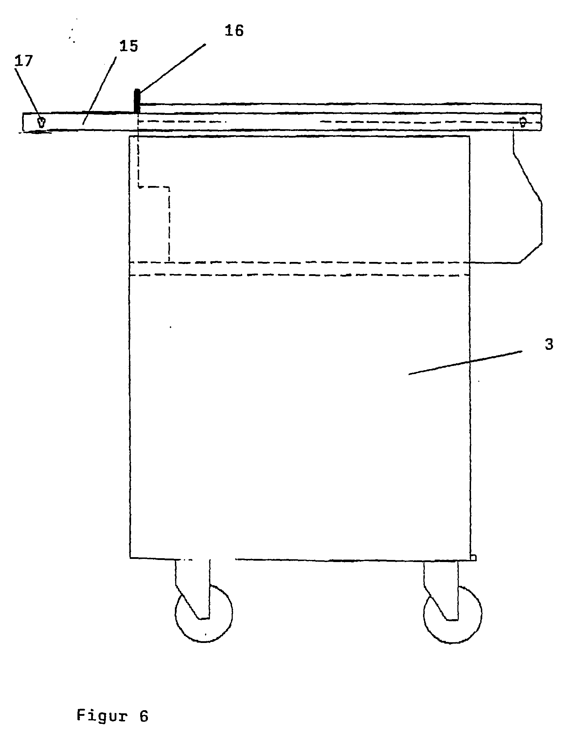

Gemäß einer bevorzugten Ausführungsform wie sie in Figuren 6, 7, 8 und 9.1 veranschaulicht ist, wird ein Verbindungssystem zur Verfügung gestellt, mit dem die einzelnen Funktionseinheiten auf einfache Art und Weise besonders fest und betriebssicher miteinander verbunden werden können.

Hierzu wird auf eine geöffnete und betriebsbereite Funktionseinheit 19 zweckmäßigerweise von der Stimseite her, d.h. der Seite, die der Bedienfläche gegenüberliegt, in Arbeitshöhe eine U-förmige Abdeckung 15 aufgeschoben, über die die Verbindung mit einer benachbarten Funktionseinheit erfolgt.
Die Innenseiten der Schenkel des U greifen hierbei in entsprechende Befestigungsvorrichtungen an der Funktionseinheit 19 ein.
So können zur Befestigung der Abdeckung 15 an den Seitenteilen der Funktionseinheit, z.B. an den Kücheneinrichtungen, entsprechende Profilierschienen vorgesehen sein, in die die als Gegenstück zu diesen Profilierschienen ausgebildeten Innenseiten der Schenkel der Abdeckung 15 eingeschoben werden können.

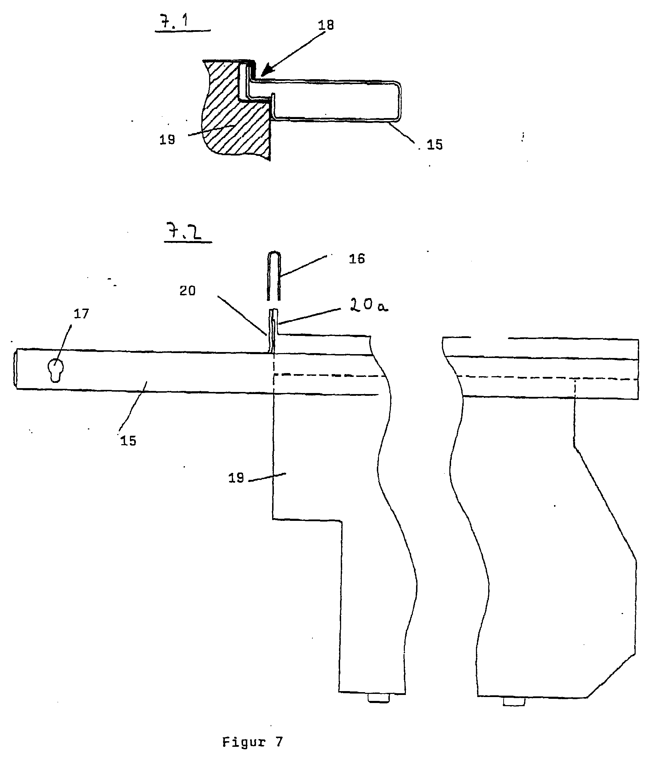

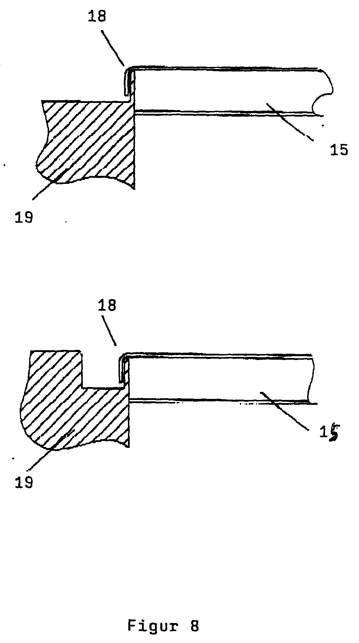

Figuren 7.1 und 8 zeigen Beispiele für bevorzugte Ausbildungen dieser Befestigungsvorrichtungen 18 mittels Profilierschienen.

Die Abdeckung 15 wird vorzugsweise auf die Kücheneinrichtung aufgeschoben. Dadurch kann ein Eindringen von verschütteten Speiseresten, Flüssigkeiten und ähnlichem in den Behälter verhindert werden.

Wesentlich für die betriebssichere Anbringung der Abdeckung 15 an der Funktionseinheit 19 ist die Fixierung der Abdeckung 15 an der Funktionseinheit 19.
Figur 7.2 zeigt die erfindungsgemäße Fixierung über einen Klemmsteg 16. Hierzu übergreift der Klemmsteg 16 nach oben gebogene, verlängerte Endkanten des Arbeitsbereiches 20a der Funktionseinheit 19, hier: der Kücheneinrichtung, sowie der Abdeckung 20, die einander gegenüberliegen und an der Stirnseite der Funktionseinheit 19 positioniert sind.
Der Klemmsteg 16 bildet eine U-förmige Rinne, die die aufeinanderstoßenden nach oben gebogenen verlängerten Kanten der Abdeckung 20 sowie des Arbeitsbereiches der Funktionseinheit 20a umfasst und fest miteinander verbindet.

Die Verbindung benachbarter Funktionseinheiten erfolgt über Verbindungselemente, die in den jeweiligen Abdeckungen 15 angebracht sind, wobei sich die Verbindungselemente an den außenliegenden Seitenflächen der Schenkel des U's befinden, die der jeweils benachbarten Funktionseinheit 19 zugewandt sind.

Vorzugsweise werden hierzu Steckverbindungen, wie sie z.B. vorstehend beschrieben worden sind, verwendet, wobei ein entsprechend positioniertes Loch-Zapfen-System verwendet wird.
Das Stecksystem kann, wie in der Vergrößerung in Figur 4, ausgebildet sein.

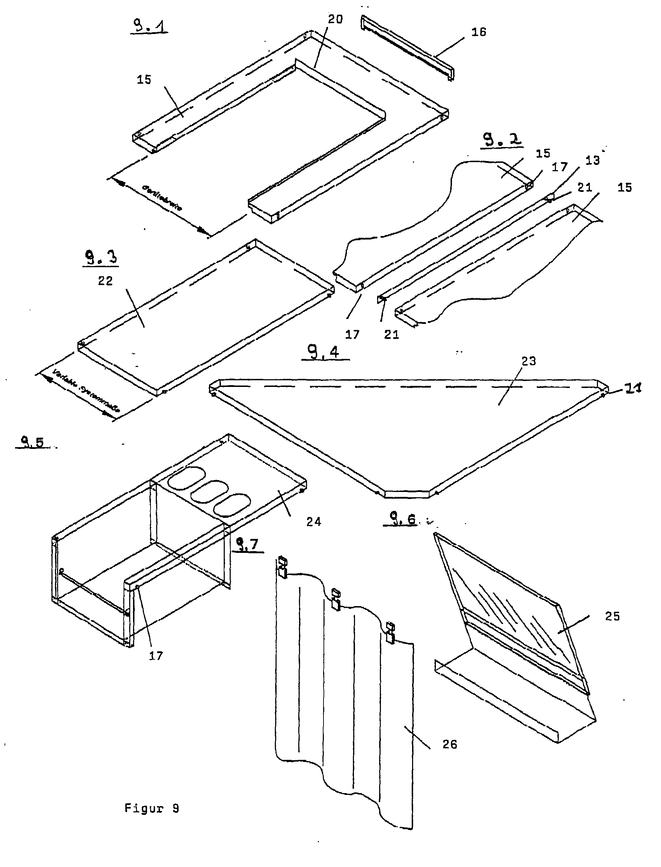

Insbesondere können auch hier Verbindungsstege 13 eingesetzt werden.
Wie in Figur 9.2 gezeigt, befinden sich in diesem Fall die Löcher 17 vorzugsweise an den Seitenflächen der Schenkel der Abdeckungen 15 und die Zapfen 21 entsprechend positioniert auf der Vorder- und Rückseite des Verbindungssteges 13.

Wie bereits vorstehend im Zusammenhang mit Figur 4 erwähnt, kann der Verbindungssteg 13 beliebig breit und geformt gewählt werden, so dass der Verbindungssteg 13 bei entsprechender Breite gleichzeitig eine zusätzliche Arbeitsplatte darstellen kann wie z. B. in Figuren 9.3 und 9.4 gezeigt.
Die in Figur 9.4 gezeigte Arbeitsplatte ist als Eckmodul ausgestaltet.

Mit den erfindungsgemäßen transportablen Funktionseinheiten können somit Küchen beliebiger Form ausgebildet werden. Die Funktionseinheiten können geradlinig, U-förmig oder L-förmig miteinander verbunden werden.
Je nach Ausgestaltung der Randbereiche der Abdeckungen 15, Arbeitsflächen, Eckmodule können die Abschlüsse rund, oval oder beliebig eckig gewählt werden.

Die Abmessungen der Abdeckungen 15, der Arbeitsflächen, Eckmodule wird vorzugsweise so gewählt, dass diese zum Transport in dem Transportbehälter der Funktionseinheit eingeschoben werden können.

In Figuren 10.2 und 10.3 sind seitlich in dem Transportbehälter untergebrachte, teilweise herausgezogene Abdeckungen 15 abgebildet.

Die Länge der Schenkel der Abdeckungen 15 sind vorzugsweise so gewählt, dass sie auf der Bedienungsseite der Funktionseinheit mit dem Arbeitsbereich abschließen, andererseits jedoch über die Frontseite des geöffneten Transportbehälters hinausragen wie z. B. in Figur 10.1 gezeigt.

Wie in Figur 10.1 zu sehen, ragt die Abdeckung 15 im montierten Zustand über die Abmessungen des Behälters hinaus, wodurch sich Hygiene- und Reinigungsvorteile ergeben.

Beispiele für Ausführungsformen der erfindungsgemäßen Funktionseinheiten im geöffneten Zustand sind in den Figuren 10.1 bis 10.5 gezeigt.
In Figur 10.1 sind zwei Funktionseinheiten 19 mit Abdeckung 15 gezeigt, wobei die rechte Funktionseinheit einen Verbindungssteg 13 zum Verbinden der beiden Funktionseinheiten 19 aufweist
Figuren 10.2 bis 10.5 zeigen Funktionseinheiten mit verschiedenen Einbauten.

Die erfindungsgemäße transportable Küche kann beliebige weitere für den Gastronomiebereich nützliche Einbauten und Zusätze enthalten. In Figuren 9.5 bis 9.7 und 10.1 sind als Beispiele für zusätzliche Ausstattungen eine Gewürzstation (Figur 9.5), die zugleich als Verbindungssteg ausgestaltet ist, ein Hustenschutz (Figur. 9.6), ein Scirting (Figur 9.7) sowie ein Spritzschutz (Figur 10.1) gezeigt.

Die erfindungsgemäßen Funktionseinheiten zeichnen sich durch einfache Montage ohne dass Werkzeuge notwendig sind aus, indem die Abdeckung 15 in die in den Funktionselementen bereits vorhandenen Profilierschienen eingeschoben wird. Die Fixierung der Abdeckung 15 an der Funktionseinheit kann zudem einfach und sicher durch Aufstecken des Klemmsteges 16 erfolgen.

Ein weiterer Vorteil ist, dass das Material beliebig gewählt werden kann je nach den gestellten Anforderungen z. B. unter optischen und/oder hygienischen Gesichtspunkten.

### Bezugszeichenliste

- 1: Grundelement des Transportbehälters
- 2: Frontteil
- 3: Seitenteil
- 4: Deckel
- 5: Profilleisten und -ecken
- 6: Haltegriff
- 7: Verschluss
- 8: Rollen
- 9: Arbeitsfläche
- 10: Schanktisch
- 11: Koch- und Bratausrüstung
- 12: Verbindungssystem
- 13: Verbindungssteg
- 14: Möbelset
- 15: Abdeckung
- 16: Klemmsteg
- 17: Loch
- 18: Verbindung Funktionseinheit-Abdeckung
- 19: Funktionseinheit
- 20: hochgezogener Randabschluss der Abdeckung
- 20a: hochgezogener Rand der Funktionseinheit
- 21: Zapfen
- 22: Verbindungssteg 13 als Arbeitsplatte
- 23: Verbindungssteg 13 als Eckmodul
- 24: Gewürzstation
- 25: Hustenschutz
- 26: einhängbares Scirting
- 7: Spritzschutz

## Patentansprüche

1. Transportbehälter zur Aufnahme von Gastronomiegeräten oder Bedarfsartiklen aller Art,
**dadurch gekennzeichnet,**
**dass** der Transportbehälter aus einem kastenförmigen Grundelement (1) gebildet ist, das auf Rollen (8) läuft, wobei die einzelnen Einheiten Vorrichtungen aufweisen zum festen Verbinden der einzelnen Einheiten untereinander unter Ausbildung einer durchgehenden Arbeitsebene.

2. Behälter nach Anspruch 1,
**dadurch gekennzeichnet,**
**dass** das kastenförmige Grundelement (1) mit aus- und/oder abklappbaren Seitenwänden (3) und/oder einem abnehmbaren Deckel (4) versehen ist.

3. Behälter nach Anspruch 1,
**dadurch gekennzeichnet,**
**dass** der Behälter einen abnehmbaren Deckel (4) und ein abnehmbares Frontteil (2) aufweist.

4. Behälter nach einem der vorhergehenden Ansprüche,
**dadurch gekennzeichnet,**
**dass** das Grundelement (1) als Getränke-Schrank-Set (8) ausgestaltet ist, das durch Aus- und Hochklappen der Seitenwände (3) zu einem Schanktisch (10) umwandelbar ist.

5. Behälter nach einem der vorhergehenden Ansprüche,
**dadurch gekennzeichnet,**
**dass** die abnehmbaren Teile des Behälters mit dem Behälter über Verschlüsse (7) fest verbindbar sind.

6. Behälter nach einem der vorhergehenden Ansprüche,
**dadurch gekennzeichnet,**
**dass** der Behälter mit Haltegriffen (6) ausgestattet ist.

7. Behälter nach einem der vorhergehenden Ansprüche,
**dadurch gekennzeichnet,**
**dass** einzelne Behälter untereinander mittels einer Steckverbindung über Löcher (17) und Zapfen (21) verbindbar sind.

8. Behälter nach Anspruch 7,
**dadurch gekennzeichnet,**
**dass** die Steckverbindung an einer Kücheneinrichtung montiert ist.

9. Behälter nach Anspruch 7 oder 8,
**dadurch gekennzeichnet,**
**dass** die einzelnen Behälter in Arbeitshöhe miteinander verbindbar sind.

10. Behälter nach einem der Ansprüche 7 bis 9,
**dadurch gekennzeichnet,**
**dass** die Löcher (17) zur Verbindung an sich gegenüberliegenden Seiten benachbarter Behälter angebracht sind und die Verbindung über einen Verbindungssteg (13) erfolgt, wobei der Verbindungssteg (13) auf den den Behältern zugewandten Seiten entsprechend positionierte Zapfen (21) aufweist.

11. Behälter nach Anspruch 10,
**dadurch gekennzeichnet,**
**dass** der Verbindungssteg (13) als Arbeitsplatte, Eckmodul oder Gewürzbehälter ausgestaltet ist.

12. Behälter nach einem der vorhergehenden Ansprüche,
**dadurch gekennzeichnet,**
**dass** der Behälter eine integrierte Kücheneinrichtung enthält.

13. Behälter nach Anspruch 12,
**dadurch gekennzeichnet,**
**dass** die Kücheneinrichtung eine Koch- oder Bratvorrichtung ist.

14. Behälter nach einem der vorhergehenden Ansprüche,
**dadurch gekennzeichnet,**
**dass** die Verbindung zwischen benachbarten Behältern über eine an den Behälter, vorzugsweise über eine an die Kücheneinrichtung, in Arbeitshöhe montierbare Abdeckung (15) erfolgt.

15. Behälter nach Anspruch 14,
**dadurch gekennzeichnet,**
**dass** die Abdeckung (15) über seitlich an der Kücheneinrichtung verlaufenden Profilierleisten aufschiebbar ist.

16. Behälter nach Anspruch 14 oder 15,
**dadurch gekennzeichnet,**
**dass** die Abdeckung (15) an der Kücheneinrichtung über einen Klemmsteg (16) fixiert ist.

17. Behälter nach einem der Ansprüche 14 bis 16,
**dadurch gekennzeichnet,**
**dass** die Abdeckung (15) im montierten Zustand über die Abmessungen des Behälters hinausragt.

18. Behälter nach einem der vorhergehenden Ansprüche,
**dadurch gekennzeichnet,**
**dass** der Behälter mit Profilen (5) versehen ist.

19. Behälter nach einem der vorhergehenden Ansprüche,
**dadurch gekennzeichnet,**
**dass** der Behälter zusätzlich mit ansteckbaren Arbeitsflächen ausgerüstet ist.

20. Behälter nach einem der vorhergehenden Ansprüche,
**dadurch gekennzeichnet,**
**dass** die Abdeckung (15) sowie mit dem Behälter verbindbare Arbeitsplatten (13) in dem Behälter verstaubar sind.

21. Verwendung eines Behälters nach einem der Ansprüche 1 bis 20
als Transport- oder Schutzbehälter zur Aufnahme von Gastronomiegeräten und Bedarfsartikeln aller Art.

22. Verwendung eines Behälters nach einem der Ansprüche 1 bis 20
zur Aufnahme eines Möbelsets (14) oder anderen im Gastronomiebereich verwendeten Geräten.
